# NEUE EUROPÄISCHE PATENTSCHRIFT

(11) **EP 0 642 558 B2**
(45) Veröffentlichungstag und Bekanntmachung des Hinweises auf die Entscheidung über den Einspruch: **24.10.2001**
(45) Hinweis auf die Patenterteilung: 25.09.1996
(21) Anmeldenummer: 93912386.5
(22) Anmeldetag: 27.05.1993
(51) Int. Cl.: C09D 5/44, C09D 5/02, C08K 5/09, C08G 59/40

(54) **KATALYSIERTE KATIONISCHE LACKBINDEMITTEL, VERFAHREN ZU IHRER HERSTELLUNG UND IHRE VERWENDUNG**
CATALYZED CATIONIC PAINT BINDERS, PROCESS FOR THEIR PREPARATION, AND THEIR USE
LIANTS DE PEINTURES CATIONIQUES CATALYSES, LEUR PROCEDE DE FABRICATION ET LEUR UTILISATION

(30) Priorität: 29.05.1992 AT 112292; 24.12.1992 AT 257192
(43) Veröffentlichungstag der Anmeldung: 15.03.1995
(73) Patentinhaber: Solutia Austria GmbH, 8402 Werndorf (AT)
(72) Erfinder: SCHIPFER, Rudolf, A-8010 Graz (AT); SCHMÖLZER, Gerhard, A-8010 Graz (AT); URBANO, Edmund, A-8044 Graz (AT)
(86) Internationale Anmeldenummer: AT9300091
(87) Internationale Veröffentlichungsnummer: WO9324578

(56) Entgegenhaltungen:
- EP-A- 0 264 834
- EP-A- 0 337 422
- EP-A- 0 509 437
- DE-A- 2 541 234

## Beschreibung

Die Erfindung betrifft katalysierte, nach Protonisierung wasserverdünnbare, kationische Lackbindemittel, die Wismutsalze von aliphatischen Hydroxycarbonsäuren enthalten, ein Verfahren zur Herstellung dieser Bindemittel und ihre Verwendung.

Kationische Lackbindemittel, die insbesonders zur Formulierung von kathodisch abscheidbaren Elektrotauchlakken eingesetzt werden, vernetzen bei erhöhter Temperatur zu einem wesentlichen Teil durch Umesterung, Umamidierung, Umurethanisierung oder durch die Reaktion endständiger Doppelbindungen.

Es ist bekannt, daß derartige Vemetzungsreaktionen durch Metallverbindungen katalysiert werden. Eine solche Katalyse für die Härtung von kathodisch abgeschiedenen Lackfilmen ist praktisch in allen Fällen notwendig, um das von den Anwendern in der Industrie geforderte Eigenschaftsbild zu erreichen.

Die wichtigsten derzeit in der Praxis gebräuchlichen Katalysatoren sind Blei- und Zinnverbindungen. Der Einsatz von toxischen bzw. ökologisch bedenklichen Blei- oder Zinnverbindungen wird jedoch zunehmend erschwert und ein Verbot der Verwendung solcher Substanzen ist abzusehen.

Es besteht daher eine besonderer Bedarf an physiologisch und ökologisch unbedenklicheren Katalysatoren, die in kathodisch abscheidbaren Elektrotauchlacken eingesetzt werden können.

Es ist seit langem bekannt, daß Wismutverbindungen die Bildung von Urethanstrukturen aus Isocyanat- und Hydroxylgruppen katalysieren (J.H. SAUNDERS and K.C. FRISCH, Polyurethanes, Chemistry and Technology aus High Polymers, Vol. XVI, Part I, Interscience Publishers, a division of John Wiley and Sons, New York, Fourth Printing, Juli 1967, Seite 167).

In Aufzählungen von geeigneten Metallen für eine Verwendung in Elektrotauchlacken wird Wismut ebenfalls angeführt, beispielsweise in der EP-A2-138193 und in der EP-Al-0264834.

In der EP-A2-138193 wird die Verwendung der Salze, speziell der Acetate, von vorzugsweise zweiwertigen Metallen zur Verbesserung der Löslichkeit von Polymeren beschrieben.

Gemäß EP-A1-0264834 wird versucht, eine gleichmäßige Verteilung von Metallsalzen oder Organometallverbindungen in polymeren Mikropartikeln entweder durch einen "lmprägnier"vorgang, durch eine Polymerisation in Gegenwart der genannten Metallverbindungen oder durch eine Copolymerisation von ethylenisch ungesättigten Metallverbindungen zu erreichen.

Prinzipiell ist die Auswahl der in Elektrotauchlacken verwendbaren Wismutverbindungen sehr eingeschränkt. Die leichter verfügbaren Salze längerkettiger Säuren, wie Bi-octoat oder Bi-neodekanoat, verursachen beim Einsatz in kationischen Bindemitteln durch ölartige Ausscheidungen Störungen im Lackfilm. Anorganische Wismutverbindungen sind durch Einmischen in das Bindemittel bzw. in eine Pigmentpaste nur schlecht verteilbar und in dieser Form katalytisch wenig wirksam.

Es wurde nun überraschenderweise gefunden, daß Kombinationen von kathodisch abscheidbaren Lackbindemitteln mit bestimmten Wismutsalzen in Form entsprechend formulierter Lacke ausgezeichnete Applikations- und Filmeigenschaften aufweisen und man somit auf die Verwendung von Blei- und Zinnverbindungen verzichten kann.

Die Erfindung betrifft demgemäß katalysierte, nach Protonisierung wasserverdünnbare, kationische Lackbindemittel, welche dadurch gekennzeichnet sind, daß sie durch Umesterung und/oder Umamidierung und/oder Umurethanisierung und/oder durch Reaktion endständiger Doppelbindungen vernetzbare kationische Lackbindemittel und Wismutsalze der Milchsäure und/oder Dimethylolpropionsäure enthalten.

Die Erfindung betrifft weiters ein Verfahren zur Herstellung der katalysierten Lackbindemittel und ihre Verwendung zur Formulierung von kathodisch abscheidbaren Elektrotauchlacken.

Die Erfindung betrifft schließlich kathodisch abscheidbare Elektrotauchlacke, welche die katalysierten Lackbindemittel in Form von Pigmentpasten sowie weitere Lackbindemittel enthalten, wobei diese in ihrem chemischen Aufbau gleichartig oder verschieden von den erfindungsgemäß hergestellten Lackbindemitteln sind und gegebenenfalls als Dispersionen vorliegen.

Wismutlactat und das Wismutsalz der Dimethylolpropionsäure (2,2-Bis-(hydroxymethyl)-propionsäure) sind mit den üblichen kationischen Bindemitteln ausgezeichnet verträglich, wobei der Gehalt an Wismut, bezogen auf den Feststoffgehalt des Lackbindemittels, 0,1 bis 5,0 Gew.-%, vorzugsweise 0,5 bis 3,0 Gew.-%, beträgt.

Die Herstellung der katalysierten Lackbindemittel erfolgt in der Weise, daß man vor der Zugabe wesentlicher Mengen von Wasser als Verdünnungsmittel das Wismutsalz der protonisierten Bindemittellösung bei 60 bis 80°C portionsweise zugibt und anschließend den Ansatz unter Rühren bei 60 bis 100°C, vorzugsweise bei 60 bis 70°C, mehrere Stunden, vorzugsweise 4 bis 8 Stunden, homogenisiert.

Bei Verwendung von Milchsäure oder Dimethylolpropionsäure als Neutralisationsmittel für das kationische Lackbindemittel kann statt der Wismutsalze ganz oder teilweise die entsprechende Menge an Wismutoxid oder Wismuthydroxid eingesetzt werden, wodurch das erfindungsgemäß verwendete Wismutsalz in situ gebildet wird.

Lackbindemittel, welche mit Hilfe des erfindungsgemäßen Verfahrens katalysiert werden können, sind in großer Anzahl aus der Literatur bekannt. Ein näheres Eingehen auf den Aufbau und die Chemie dieser Produkte ist daher nicht notwendig. Dies gilt auch für die Formulierung bzw. Verarbeitung der entsprechenden Pigmentpasten und Lacke.

In einer besonderen Ausführungsform wird das Wismutsalz in einem als Pastenharz verwendbaren Lackbindemittel am Dissolver bei 30 bis 60°C während 15 bis 60 Minuten und anschließend auf einer Perlmühle, gegebenenfalls in Gegenwart von Pigmenten, während 0,5 bis 1,5 Stunden homogenisiert.

Als Pastenharz verwendbare, durch Umesterung und/oder Umamidierung und/oder Umurethanisierung und/oder durch Reaktion endständiger Doppelbindungen vernetzbare kationische Lackbindemittel werden vielfach beschrieben, beispielsweise in DE 2634211 C2, DE-OS-2634229, EP 107088 A1, EP 107089 A1, EP 107098 A1, EP 251772 A2, EP 336599 A2 und AT-PS 380 264.

Der Gehalt an Wismut, bezogen auf den Feststoffgehalt des als Pastenharz verwendbaren Lackbindemittels, beträgt 0,5 bis 25 Gew.-%, vorzugsweise 1,5 bis 20 Gew.-%.

Die katalysierten als Pastenharze verwendbaren Lackbindemittel werden nach bekannten Verfahren in die entsprechenden Pigmentpasten übergeführt, welche zur Formulierung von kathodisch abscheidbaren Elektrotauchlacken mit weiteren Lackbindemitteln kombiniert werden, wobei diese in ihrem chemischen Aufbau gleichartig oder verschieden von den Pastenharzen sind und gegebenenfalls als Dispersionen vorliegen.

Die Beispiele erläutern die Erfindung, ohne sie in ihrem Umfang einzuschränken. Alle Angaben in Teilen oder Prozenten beziehen sich auf Gewichtseinheiten.

Folgende Abkürzungen werden in den Beispielen verwendet:
- EGL: Ethylenglykolmonoethylether
- DEAPA: Diethylaminopropylamin
- CE: Glycidylester einer C₉-C₁₁-tert.-Monocarbonsäure
- BUGL: Ethylenglykolmonobutylether
- MP: Methoxypropanol
- TDI: Toluylendiisocyanat (handelsübliches Isomerengemisch)
- DGDME: Diethylenglykoldimethylether
- PF 91: Paraformaldehyd 91%ig

### Herstellung der Bindemittel-Komponenten:

### Basisharz B1:

190 g eines Bisphenol-A-Epoxidharzes (Epoxidäquivalent 190) und 1425 g eines Bisphenol-A-Epoxidharzes (Epoxidäquivalent 475) werden bei 100 °C in 597 g EGL gelöst. Die Lösung wird auf 60 °C gekühlt und mit 126 g Diethanolamin versetzt. Man steigert die Temperatur während 2 Stunden langsam auf 80°C. Anschließend werden 169 g DEAPA zugegeben. Die Temperatur wird in 2 Stunden auf 120°C gesteigert. Bei dieser Temperatur werden 478 g CE zugegeben, der Ansatz wird 5 Stunden bei 130°C gerührt und schließlich mit EGL auf einen Feststoffgehalt von 65 Gew.-% verdünnt. Das Harz hat eine Aminzahl von 91 mg KOH/g und eine Hydroxylzahl von 265 mg KOH/g, jeweils auf den Feststoff bezogen.

### Basisharz B2:

2 g Azobisisobutyronitril werden in 40 g Isopropanol unter Erwärmen gelöst. Zur klaren Lösung wird bei Rückflußtemperatur (ca. 84°C) ein Monomerengemisch, bestehend aus 20 g Glycidylmethacrylat, 20 g Hydroxyethylmethacrylat, 20 g Methylmethacrylat und 40 g 2-Ethylhexylacrylat, in dem 2 g Azobisisobutyronitril klar gelöst sind, während 2 Stunden gleichmäßig zugegeben. Die Reaktionsmasse wird weitere 3 Stunden bei Rückflußtemperatur gerührt. Anschließend wird eine homogene Lösung von 16 g Diisopropanolamin in 20 g BUGL der Reaktionsmasse bei 85°C rasch zugegeben, der Ansatz noch 2 Stunden bei 90°C gerührt und schließlich das Produkt bei 90°C mit 13 g EGL und bei 40°C mit Aceton verdünnt.

Das Harz hat einen Feststoffgehalt von 57 Gew.-%, eine Aminzahl von 58 mg KOH/g und eine Hydroxylzahl von 250 mg KOH/g, jeweils auf den Feststoff bezogen.

### Basisharz B3:

570 g (3 Val) eines Epoxidharzes auf Basis von Bisphenol A (Epoxidäquivalent 190) und 317 g MP werden auf 60°C erwärmt, innerhalb von 2 Stunden mit einer Mischung aus 116 g (0,9 Val) Ethylhexylamin und 163 g (0,15 NH-Val) eines polymeren Amins (siehe unten) versetzt und bis zu einem MEQ-Wert von 2,06 reagiert. Anschließend werden 1330 g (2,1 Val) einer 75 %igen Lösung eines Bisphenol A-Epoxidharzes (Epoxidäquivalent 475) in MP zugegeben. In der Folge wird bei 60°C innerhalb einer Stunde eine Lösung von 189 g (1,8 Val) Diethanolamin in 176 g MP zugegeben und die Reaktion bis zu einem MEQ-Wert von 1,57 geführt. Nach weiterer Zugabe einer Lösung von 78 g (1,2 Val) DEAPA in 54 g MP innerhalb einer Stunde wird bei 60°C bis zu einem MEQ-Wert von 1,46 reagiert. Die Temperatur wird auf 90°C und anschließend innerhalb einer weiteren Stunde auf 120°C gesteigert. Bei Erreichen einer Viskosität (GARDNER-HOLD; 6 g Harz + 4 g MP) von I-J wird mit MP auf einen Feststoffgehalt von 65 Gew.-% verdünnt. Das Produkt hat eine Aminzahl von 117 mg KOH/g und eine Hydroxylzahl von 323 mg KOH/g, jeweils auf den Feststoff bezogen.

Das polymere Amin wird durch Umsetzung von 1 Mol Diethylentriamin mit 3,1 Mol 2-Ethylhexylglycidylether und 0,5 Mol eines Bisphenol A-Epoxidharzes (Epoxidäquivalent 190) in 80%iger MP-Lösung hergestellt. Das Produkt weist eine Viskosität (DIN 52211/20°C; 100 g Harz + 30 g MP) von 60 bis 80 Sekunden auf.

### Vernetzungskomponente VK 1:

In einem Reaktionsgefäß, welches mit einer für das Azeotropverfahren geeigneten Einrichtung und mit einer Glokkenbodenkolonne zur Abtrennung der bei der partiellen Umesterung gebildeten Alkoholkomponente ausgestattet ist, werden zu einer Mischung aus 160 g (1 Mol) Malonsäurediethylester, 0,34 g (0,004 Mol) Piperidin und 0,22 g (0,004 Mol) Ameisensäure 85 %ig bei 80°C 29,7 g (0,9 Mol) Paraformaldehyd 91 %ig portionsweise so zugegeben, daß bei Einsetzen der exothermen Reaktion eine Temperatur von 95°C nicht überschritten wird. Das Reaktionsgemisch wird bei 95°C gerührt, bis der Paraformaldehyd vollständig gelöst ist. Die Temperatur wird unter einsetzender Wasserabspaltung innerhalb von 2 Stunden auf 110°C erhöht. Nach Erreichen von 110°C werden mit Spezialbenzin (Siedebereich 80 - 120°C) als Schleppmittel insgesamt 9 g Wasser abdestilliert. Unter Anlegen von Vakuum wird anschließend das eingesetzte Schleppmittel entfernt.

Nach Zugabe von 22,8 g (0,3 Mol) Propylenglykol-1,2 wird der Ansatz bis zum Destillationsbeginn (140 - 150°C) erhitzt. Bei steigender Temperatur werden 27 Tle (0,6 Mol) Ethanol abdestilliert. Das erhaltene Produkt weist einen Feststoffgehalt (120°C,30 Minuten) von ca. 92 Gew.-%, eine OH-Zahl unter 5 mg KOH/ g, eine Grenzviskositätszahl von ca. 5,2 ml/g (20°C, Dimethylformamid) und einen Brechungsindex n 20/d von 1,4670 auf.

### Vernetzungskomponente VK 2:

Umsetzungsprodukt von 134 g (1 Mol) Trimethylolpropan mit 851 g (2,8 Mol) eines mit 2-Ethylhexanol halbblokkierten TDI in 70 %iger DGDME-Lösung.

### Vernetzungskomponente VK 3:

134 g (1 Mol) Trimethylolpropan werden mit 160 g (1 Mol) Malonsäurediethylester versetzt und bis zum Destillationsbeginn (ca. 140 - 150°C) erhitzt. Bei steigender Temperatur (bis 180°C) werden 46 g (1 Mol) Ethanol abdestilliert. Nach beendeter Reaktion wird mit 128 g DGDME verdünnt und auf 60°C gekühlt. Anschließend werden 264 g (1 Mol bzw. 1 NCO-Aquivalent) eines Reaktionsproduktes aus 1 Mol TDI und 1 Mol EGL innerhalb von 4 Stunden zugegeben und bei 60°C auf einen NCO-Gehalt unter 0,02 Milliäquivalente pro g Probe reagiert.

Das erhaltene Produkt hat einen Feststoffgehalt von 80 ± 2 Gew.-% (30 Minuten, 120°C), eine Viskosität nach GARDNER - HOLD (10 g Produkt + 2 g DGDME) von K und einen Brechnungsindex n 20/d von 1,4960.

### Pastenharz P1:

### (entsprechend Beispiel 2 der AT-PS 380 264)

In einem mit Rührer, Thermometer, Zugabetrichter, Wasserabscheider und Rückflußkühler ausgestattetem Reaktionsgefäß werden 320 Tle eines Epoxidharzes auf Basis von Polypropylenglykol (Äquivalentgewicht ca. 320) bei 75 bis 80°C mit 134 Tlen Talgfettamin und 52 Tlen DEAPA bis zu einem Epoxidwert von 0 umgesetzt. Nach Zugabe von 30 Tlen PF 91 werden mit Spezialbenzin (Siedebereich 80 bis 120°C) 19 Tle Reaktionswasser azeotrop entfernt. Das Schleppmittel wird anschließend im Vakuum abdestilliert.

### Pastenharz P2:

### (entsprechend Beispiel 1 der EP 0107098 B1)

302 Tle eines Umsetzungsprodukts von 286 Tlen einer dimerisierten Fettsäure mit 127 Tlen Dimethylaminopropylamin (ca. 2. Stunden bei 135 bis 140°C, Entfernung des überschüssigen Amins im Vakuum) und 209 Tle 2-Butoxyethanol werden in einem geeigneten Reaktionsgefäß auf 50°C erwärmt. Nach Zugabe von 90 Tlen 88%iger Milchsäure wird die Temperatur ca. 15 Minuten bei 55 bis 65°C gehalten. Dieser Vorgang wird nach Zugabe von 72 Tlen deionisierten Wassers wiederholt. Zuletzt werden 128 Tle Butylglycidylether zugegeben. Der Ansatz wird noch 2 Stunden bei 75 bis 85°C gehalten. Das Reaktionsprodukt weist einen Feststoffgehalt von ca. 62 Gew.-% auf.

### Herstellung der Wismutverbindungen

- a) Wismutformiat:: 466 Tle (1 Mol) Wismutoxid + 379 Tle (7 Mol) Ameisensäure 85 % in Wasser + 1126 Tle Wasser
- b) Wismutacetat:: 466 Tle (1 Mol) Wismutoxid + 420 Tle (7 Mol) Essigsäure + 1332 Tle Wasser
- c) Wismutlactat:: 466 Tle (1 Mol) Wismutoxid + 901 Tle (7 Mol) Milchsäure 70 % in Wasser
- d) Wismutdimethylolpropionat:: 466 Tle (1 Mol Wismutoxid + 938 Tle (7 Mol) Dimethylolpropionsäure + 2154 Tle Wasser
- e) Wismutsalicylat:: 466 Tle (1 Mol) Wismutoxid + 966 Tle (7 Mol) Salicylsäure + 2135 Tle Wasser

Deionisiertes Wasser und Säure werden vorgelegt und auf 70°C erwärmt. Unter Rühren wird handelsübliches Wismutoxid (Bi₂O₃) portionsweise zugegeben. Nach weiteren 6 Stunden Rühren bei 70°C wird der Ansatz auf ca 20°C gekühlt.

### Beispiele 1 bis 13

### Herstellung und Prüfung der katalysierten Lacksysteme

Die Beispiele 1 bis 9 und 11 bis 13 (Tabelle 1) enthalten Kombinationen von Bindemitteln mit verschiedenen Wismutsalzen. Im Beispiel 10 wird als Vergleich ein dem Stand der Technik entsprechender Bleikatalysator (Bleioctoat) eingesetzt.

Die Bindemittelkomponenten werden bei 60°C in einem Verhältnis von 70 Tlen Basisharz und 30 Tlen Vernetzungskomponente (bezogen auf Festsubstanzen) gemischt. Anschließend wird die Säure zugegeben, wobei die erforderliche Menge an Neutralisationsmittel zur Erreichung einwandfreier Wasserlöslichkeit in Vorversuchen ermittelt wurde. Es wird auf 70°C erhitzt und innerhalb von 2 Stunden die Wismutverbindung unter Rühren portionsweise zugegeben. Anschließend wird noch 6 Stunden bei 60 - 70°C gerührt und zuletzt mit Methoxypropanol auf einen Feststoffgehalt von 65 Gew.-% verdünnt.

In den Beispielen 1 bzw. 6 werden der mit Milchsäure neutralisierten Bindemittelkombination handelsübliches Wismutoxid bzw. Wismuthydroxyd statt des Wismutlactats zugesetzt.

Zur Überprüfung der geforderten homogenen und stabilen Verteilung werden die Produkte mit Methoxypropanol auf einen Feststoffgehalt von 50 Gew.-% weiterverdünnt. Nach 24 Stunden wird die Sedimentbildung beurteilt.

Mit den Produkten gemäß den Beispielen 1 bis 13 werden entsprechend der Formulierung 100 Tle Bindemittel (Festsubstanz), 39,5 Tle Titanoxid, 0,5 Tle Farbruß, pigmentierte Lacke mit einem Festkörpergehalt von 18 Gew-% in üblicher Weise hergestellt. Aus diesen Lakken werden Filme mit einer Trockenfilmstärke von 20 ± 2 um auf zinkphosphatierte Stahlbleche kathodisch abgeschieden und 20 Minuten bei Temperaturen von 160, 170 und 180°C eingebrannt.

Zur Prüfung der eingebrannten Filme auf ihre Acetonfestigkeit wird ein mit Aceton getränkter Wattebausch auf den Lackfilm gelegt und die Zeit bestimmt, nach welcher der Film durch Kratzen mit dem Fingernagel verletzt werden kann.

Die Prüfung auf Schlagfestigkeit der Filme erfolgt nach ERICHSEN (ASTM-D 2794).

Die Korrosionsfestigkeit der Filme wird als Salzsprühtest nach ASTM B-117-64 bestimmt. Angegeben wird die Zeit bis zu einer Unterwanderung am Schnitt von insgesamt 3 mm.

Die Ergebnisse sind in Tabelle 2 zusammengefaßt.

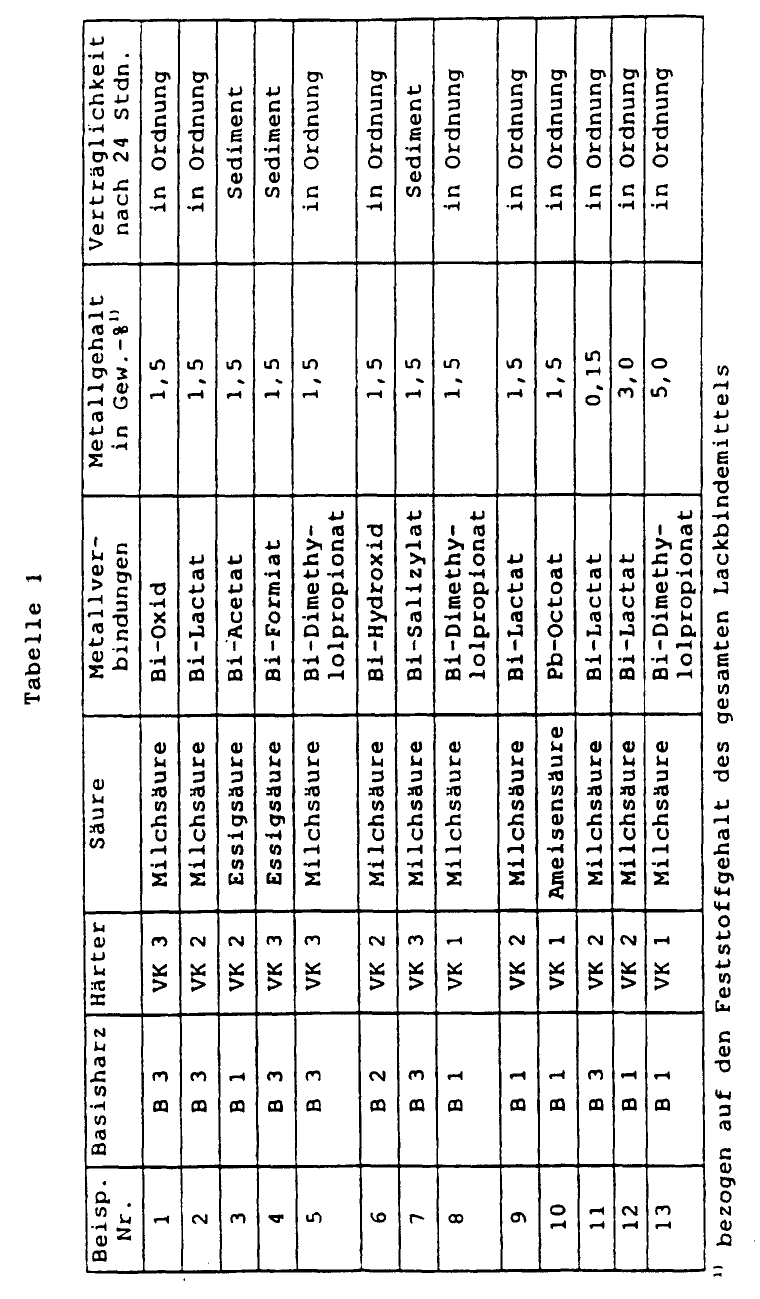

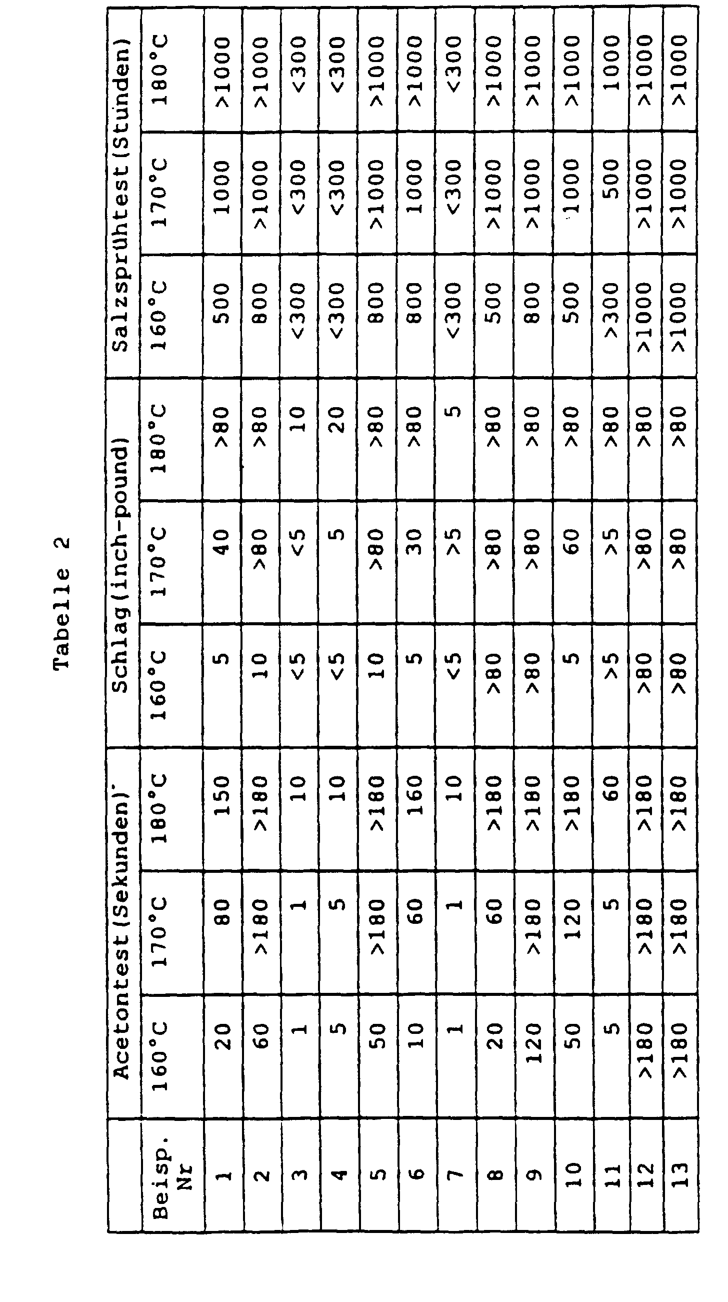

### Beispiele 14 bis 17

### Herstellung und Prüfung der katalysierten Lacksysteme unter Verwendung von katalysierten Pastenharzen

### Herstellung einer Bindemittellösung:

70 Tle Basisharz B 1 und 30 Tle Vernetzungskomponente VK 2 (bezogen auf Festsubstanzen) werden bei 60°C gemischt. Nach Neutralisation mit Milchsäure (45 mMol auf 100 g Bindemittel-Festsubstanz) wird mit deionisiertem Wasser auf einen Feststoffgehalt von 15 Gew.-% verdünnt.

### Beispiel 14:

275 Tle Pastenharz P 1 werden mit 22,7 Tlen Milchsäure und 56 Tlen Wismutoxid bei ca. 50°C während 30 Minuten am Dissolver gemischt und 1 Stunde auf einer Perlmühle gerieben (Gehalt an Wismut von 18,0 Gew.-%, bezogen auf den Feststoffgehalt des Pastenharzes P1).

Anschließend wird mit 1552 Tlen Wasser verdünnt. Nach Zugabe von 16 Tlen Farbruß und 1584 Tlen Titandioxid wird nochmals 1 Stunde auf der Perlmühle gerieben. 636 Tle dieser Pigmentpaste werden in 4364 Tlen der oben beschriebenen Bindemittellösung dispergiert. Der pigmentierte Lack hat einen Feststoffgehalt von ca. 18 Gew.-% (Gehalt an Wismut von 1,4 Gew.-%, bezogen auf den Feststoffgehalt des gesamten Lackbindemittels).

### Beispiel 15:

458 Tle Pastenharz P2 werden mit 231 Tlen Wismutdimethylolpropionat (Metallgehalt 12 %) bei ca. 45°C während 30 Minuten am Dissolver gemischt (Gehalt an Wismut von 10 Gew.-%, bezogen auf den Feststoffgehalt des Pastenharzes P2).

Danach wird mit 1193 Tlen Wasser verdünnt. Nach Zugabe von 16 Tlen Farbruß und 1601 Tlen Titandioxid wird nochmals 30 Minuten am Dissolver gemischt und 1 Stunde auf der Perlmühle gerieben. 636 Tle dieser Pigmentpaste werden in 4364 Tlen der oben beschriebenen Bindemittellösung dispergiert. Der pigmentierte Lack hat einen Feststoffgehalt von ca. 18 Gew.-% (Gehalt an Wismut von 0,9 Gew.-%, bezogen auf den Feststoffgehalt des gesamten Lackbindemittels).

### Beispiel 16:

275 Tle Pastenharz P 1 werden mit 60,0 Tlen Milchsäure und 77 Tlen Wismutoxid bei ca. 50°C während 30 Minuten am Dissolver gemischt und 1 Stunde auf einer Perlmühle gerieben (Gehalt an Wismut von 25,0 Gew.-%, bezogen auf den Feststoffgehalt des Pastenharzes P1).

Anschließend wird mit 1537 Tlen Wasser verdünnt. Nach Zugabe von 16 Tlen Farbruß und 1584 Tlen Titandioxid wird nochmals 1 Stunde auf der Perlmühle gerieben. 636 Tle dieser Pigmentpaste werden in 4364 Tlen der oben beschriebenen Bindemittellösung dispergiert. Der pigmentierte Lack hat einen Feststoffgehalt von ca. 18 Gew.-% (Gehalt an Wismut von 1,4 Gew.-%, bezogen auf den Feststoffgehalt des gesamten Lackbindemittels).

### Beispiel 17:

458 Tle Pastenharz P2 werden mit 12 Tlen Wismutdimethylolpropionat (Metallgehalt 12 %) bei ca. 45°C während 30 Minuten am Dissolver gemischt (Gehalt an Wismut von 0,5 Gew.-%, bezogen auf den Feststoffgehalt des Pastenharzes P2).

Danach wird mit 1193 Tlen Wasser verdünnt. Nach Zugabe von 16 Tlen Farbruß und 1601 Tlen Titandioxid wird nochmals 30 Minuten am Dis solver gemischt und 1 Stunde auf der Perlmühle gerieben. 636 Tle dieser Pigmentpaste werden in 4364 Tlen der oben beschriebenen Bindemittellösung dispergiert. Der pigmentierte Lack hat einen Feststoffgehalt von ca. 18 Gew.-% (Gehalt an Wismut von 0,15 Gew.-%, bezogen auf den Feststoffgehalt des gesamten Lackbindemittels).

Die lacktechnischen Prüfungen wurden in gleicher Weise wie bei den Beispielen 1 bis 13 durchgeführt. Die Ergebnisse sind in Tabelle 3 zusammengefaßt.

**Tabelle 3**

| | Acetontest (Sekunden) | | | Schlag (inch-pound) | | | Salzsprühtest (Stunden) | | |
|---|---|---|---|---|---|---|---|---|---|
| Beisp. Nr. | 160°C | 170°C | 180°C | 160°C | 170°C | 180°C | 160°C | 170°C | 1180°C |
| 14 | 30 | 150 | >180 | 5 | 60 | >80 | 300 | 1000 | >1000 |
| 15 | 50 | >180 | >180 | 20 | >80 | >80 | 500 | >1000 | >1000 |
| 16 | 120 | >180 | >180 | 60 | >80 | >80 | 1000 | >1000 | >1000 |
| 17 | 5 | 20 | 150 | 5 | 5 | >80 | 300 | 500 | 1000 |

## Patentansprüche

1. Katalysierte, nach Protonisierung wasserverdünnbare, kationische Lackbindemittel, **dadurch gekennzeichnet, daß** sie durch Umesterung und/oder Umamidierung und/oder Umurethanisierung und/oder durch Reaktion endständiger Doppelbindungen vernetzbare kationische Lackbindemittel und Wismutsalze der Milchsäure und/oder der Dimethylolpropionsäure enthalten.

2. Lackbindemittel gemäß Anspruch 1, **dadurch gekennzeichnet, daß** der Gehalt an Wismut, bezogen auf den Feststoffgehalt des Lackbindemittels 0,1 bis 5,0 Gew.-%, vorzugsweise 0,5 bis 3,0 Gew.-%, beträgt.

3. Lackbindemittel gemäß Anspruch 1, **dadurch gekennzeichnet, daß** sie als Pastenharz verwendbar sind und der Gehalt an Wismut, bezogen auf den Feststoffgehalt des Lackbindemittels 0,5 bis 25 Gew.-%, vorzugsweise 1,5 bis 20 Gew.-%, beträgt.

4. Verfahren zur Herstellung von Lackbindemitteln gemäß Anspruch 2, **dadurch gekennzeichnet, daß** man vor der Zugabe wesentlicher Mengen von Wasser als Verdünnungsmittel das Wismutsalz der protonisierten Bindemittellösung bei 60 bis 80 °C portionsweise zugibt und anschließend den Ansatz unter Rühren bei 60 bis 100 °C, vorzugsweise bei 60 bis 70 °C, mehrere Stunden, vorzugsweise 4 bis 8 Stunden, homogenisiert.

5. Verfahren zur Herstellung von Lackbindemitteln gemäß Anspruch 3, **dadurch gekennzeichnet, daß** man das Wismutsalz im als Pastenharz verwendbaren Lackbindemittel am Dissolver bei 30 bis 60 °C während 15 bis 60 Minuten und anschließend auf einer Perlmühle, gegebenenfalls in Gegenwart von Pigmenten, während 0,5 bis 1,5 Stunden homogenisiert.

6. Verfahren gemäß den Ansprüchen 4 und 5, **dadurch gekennzeichnet, daß** man bei Verwendung von Milchsäure oder Dimethylolpropionsäure zum Neutralisieren der Lackbindemittel statt der Wismutsalze der Säuren ganz oder teilweise die entsprechenden Mengen an Wismutoxid oder Wismuthydroxid homogenisiert.

7. Verwendung der Lackbindemittel gemäß den Ansprüchen 1 bis 3 zur Formulierung von kathodisch abscheidbaren Elektrotauchlacken.

8. Kathodisch abscheidbare Elektrotauchlacke, welche die gemäß Anspruch 5 hergestellten Lackbindemittel in Form von Pigmentpasten sowie weitere Lackbindemittel enthalten, wobei diese in ihrem chemischen Aufbau gleichartig oder verschieden von den Lackbindemitteln gemäß den Ansprüchen 1 bis 3 und gegebenenfalls als Dispersionen vorliegen.

## Claims

1. Catalysed cationic paint binders which are waterthinnable after protonation, **characterised in that** they contain cationic paint binders which are crosslinkable by transesterification and/or transamidation and/or transurethanisation and/or by reaction of terminal double bonds, and bismuth salts of lactic and/or dimethylol propionic acid.

2. Paint binders according to claim 1, **characterised in that** the bismuth content based on the solids content of the paint binder is from 0.1 to 5.0 % by weight, preferably 0.5 to 3 % by weight.

3. Paint binders according to claim 1, **characterised in that** they can be used as paste resin, and that the bismuth content based on the solids content of the paint binder is from 0.5 to 25 % by weight, preferably from 1.5 to 20 % by weight.

4. Process for the preparation of paint binders according to Claim 2, **characterised in that**, prior to the addition of significant amounts of water as a diluent, the bismuth salt is added in portions to the protonated binder solution at 60 to 80 °C and the mixture is subsequently homogenised with stirring at 60 to 100 °C, preferably at 60 to 70 °C, for several hours, preferably for 4 to 8 hours.

5. Process for the preparation of paint binders according to Claim 3, **characterised in that** the bismuth salt is homogenised in the paint binder which can be used as paste resin in a dissolver at 30 to 60 °C for 15 to 60 minutes and then in a bead mill, if appropriate in the presence of pigments, for 0.5 to 1.5 hours.

6. Process according to Claims 4 and 5, **characterised in that**, when using lactic acid or dimethylolpropionic acid for neutralising the paint binders, the bismuth salts of the acids are replaced wholly or partly by the corresponding amounts of bismuth oxide or bismuth hydroxide and homogenised.

7. Use of the paint binders according to Claims 1 to 3 in the formulation of cathodically depositable electrodeposition coatings.

8. Cathodic electrodeposition coatings which contain the paint binders prepared according to Claim 5 in the form of pigment pastes and further binders, the latter having a chemical structure which is identical to or different from that of the paint binders according to Claims 1 to 3 and being present, if appropriate, as dispersions.

## Revendications

1. Liants pour peintures cationiques catalysés, diluables à l'eau après protonation, **caractérisés en ce qu'**ils contiennent des liants pour peintures cationiques réticulables par transestérification et/ou transamidation et/ou tranuréthannisation et/ou par réaction de doubles liaisons en bout de chaîne et des sels de bismuth de l'acide lactique et/ou de l'acide diméthylolpropionique.

2. Liants pour peintures selon la revendication 1, **caractérisés en ce que** leur tenue en bismuth, rapporté au taux de solides du liant pour peintures, s'élève de 0,1 à 5,0 % en poids, de préférence de 0,5 à 3,0 % en poids.

3. Liants pour peintures selon la revendication 1, **caractérisés en ce qu'** ils sont utilisables en tant que résine en pâte, et que leur teneur en bismuth, rapporté au taux de solides du liant pour peintures, s'élève de 0,5 à 25 % en poids, de préférence de 1,5 à 20 % en poids.

4. Procédé de préparation de liants pour peintures selon la revendication 2, **caractérisé en ce que** l'on ajoute par portions entre 60 et 80 °C le sel de bismuth de la solution de liant protonée avant l'addition de quantités importantes d'eau en tant que diluant et qu'on homogénéise ensuite la charge sous agitation entre 60 et 100 °C, de préférence entre 60 et 70 °C, pendant plusieurs heures, de préférence pendant 4 à 8 heures.

5. Procédé de préparation de liants pour peintures selon la revendication 3, **caractérisé en ce qu'**on homogénéise le sel de bismuth dans le liant pour peintures utilisable en tant que résine en pâte dans un dissolveur entre 30 et 60 °C pendant 15 à 60 minutes et ensuite dans un broyeur Perl, éventuellement en présence de pigments, pendant 0,5 à 1,5 heures.

6. Procédé selon les revendications 4 et 5, **caracterisé en ce que**, lors de l'emploi d'acide lactique ou d'acide diméthylolproprionique pour la neutralisation des liants pour peintures, on homogénéise en totalité ou en partie à la place des sels de bismuth des acides les quantités correpondantes d'oxyde de bismuth ou d'hydroxyde de bismuth.

7. Utilisation des liants pour peintures selon les revendications 1 à 3 pour la formulation de peintures électrophorétiques déposables à la cathode.

8. Peintures électrophorétiques déposables à la cathode contenant les liants pour peintures préparés selon la revendication 5 sous forme de pâtes pigmentaires ainsi que d'autes liants pour peintures, ceux-ci étant, quant à leur constitution, identiques ou différents des liants pour peintures selon les revendications 1 à 3 et se trouvent éventuellement présents sous forme de dispersions.
